# EUROPEAN PATENT APPLICATION

(11) **EP 4 838 585 A1**
(43) Date of publication of application: **11.11.2026**
(21) Application number: 26175124.2
(22) Date of filing: 28.04.2026
(51) Int. Cl.: H01M 4/62, H01M 4/04, H01M 10/0562, H01M 4/02

(54) **CATHODE FOR ALL-SOLID-STATE BATTERY AND METHOD OF MANUFACTURING SAME**

(30) Priority: 08.05.2025 KR 20250059590
(71) Applicant: SK On Co., Ltd., Seoul 03161 (KR)
(72) Inventor: WOO, Je Hoon, 34124 Daejeon (KR); KWON, Mi Sook, 34124 Daejeon (KR); LEE, Seok Hee, 34124 Daejeon (KR)
(74) Representative: Prüfer & Partner mbB Patentanwälte · Rechtsanwälte

(57) **Abstract**

A cathode for the solid-state battery includes a cathode mixture layer on a current collector, wherein the cathode mixture layer includes a cathode active material, a solid electrolyte, a conductive material and a binder, and the conductive material may include a linear-type conductive material and a point-type conductive material at a weight ratio of 4:1 to 10:1.

## Description

### TECHNICAL FIELD

The present disclosure relates to a cathode for an all-solid-state battery and a method of manufacturing the same.

### BACKGROUND

The conductive material used in an electrode of a secondary battery may promote movement of electrons between electrode active materials to impart electrical properties between the active materials, and may be added to the electrode to improve performance of the secondary battery.

The conductive material included in the electrode may be classified according to a form thereof, and examples include linear-type conductive materials having a fibrous structure and point-type conductive materials having a particle shape. The linear-type conductive material enables long-distance electron transfer in an electrode and thus has good effects on improving battery performance but is poor in dispersibility whereas the point-type conductive material has good dispersibility but exhibits less improvement in battery performance than the linear-type conductive material.

### SUMMARY

An aspect of the present disclosure is to provide a cathode for an all-solid-state battery and a method of manufacturing the same.

According to an aspect of the present disclosure, a cathode for an all-solid-state battery includes a cathode mixture layer on a current collector, wherein the cathode mixture layer includes a cathode active material, a solid electrolyte, a conductive material and a binder, and the conductive material includes a linear-type conductive material and a point-type conductive material at a weight ratio of 4:1 to 10:1.

In some embodiments, the linear-type conductive material may include carbon fibers.

In some embodiments, the point-type conductive material may be one or more selected from the group consisting of Super-C65, acetylene black, Ketjen black, channel black, Denka black, lamp black, thermal black and furnace black.

In some embodiments, the binder may include a fibrillated binder.

In some embodiments, the binder may be one or more selected from the group consisting of polytetrafluoroethylene (PTFE), polyethylene oxide (PEO), polyacrylonitrile (PAN), polyethylene (PE), and polypropylene (PP).

In some embodiments, the solid electrolyte may be one or more selected from the group consisting of a sulfide-based solid electrolyte and an oxide-based solid electrolyte.

In some embodiments, the cathode mixture layer may include 75.0 to 90.0 wt% of the cathode active material, 8.0 to 24.0 wt% of the solid electrolyte, 0.5 to 3.0 wt% of the conductive material and 0.3 to 2.0 wt% of the binder.

In some embodiments, the density of the cathode mixture layer may be from 3.0 to 3.5 g/cm³.

In some embodiments, the thickness of the cathode mixture layer may be from 60 µm to 350 µm.

According to another aspect of the present disclosure, there is provided a method for manufacturing a cathode for an all-solid-state battery, which includes the steps of: mixing raw materials including a cathode active material, a solid electrolyte, a conductive material and a binder to provide a mixed powder; kneading the mixed powder and then pulverizing the same to prepare a dry cathode composition; and coating the dry cathode composition on a current collector and rolling the coated composition to form a cathode mixture layer, wherein the conductive material includes a linear-type conductive material and a point-type conductive material at a weight ratio of 4:1 to 10:1.

In some embodiments, the kneading may be performed by applying shear stress or heat and shear stress.

In some embodiments, the dry cathode composition may be coated on the current collector by being rolled after being sprayed onto the current collector, or may be coated on the current collector after being manufactured in a film form, or may be coated on the current collector together while being manufactured in a film form.

In some embodiments, the raw material may include 75.0 to 90.0 wt% of the cathode active material, 8.0 to 24.0 wt% of the solid electrolyte, 0.5 to 3.0 wt% of the conductive material and 0.3 to 2.0 wt% of the binder.

In some embodiments, the dry cathode composition may be coated on the current collector such that an amount of the cathode active material per area of the cathode ranges from 15 to 40 mg/cm².

The cathode for an all-solid-state battery and a method of manufacturing the same according to an embodiment of the present disclosure may improve C-rate performance of the all-solid-state battery.

The cathode for an all-solid-state battery and a method of manufacturing the same according to an embodiment of the present disclosure may prevent deterioration of a solid electrolyte in the cathode.

The cathode for an all-solid-state battery and a method of manufacturing the same according to an embodiment of the present disclosure may provide a cathode for an all-solid-state battery having high electrode density.

The cathode for an all-solid-state battery and a method of manufacturing the same according to an embodiment of the present disclosure may be widely applied in green technology fields such as electric vehicles, battery charging stations, and other battery-based applications such as solar power generation and wind power generation. In addition, the cathode for an all-solid-state battery and a method of manufacturing the same according to an embodiment of the present disclosure may be used in eco-friendly electric vehicles, hybrid vehicles, etc., which suppress air pollution and greenhouse gas emissions to ameliorate the effects of climate change.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a voltage profile obtained in Experimental Example 1 of the present disclosure.
FIG. 2 is a graph illustrating capacity retention at a high C-rate (0.2 C to 2 C) compared with a low C-rate (0.1 C), obtained in Experimental Example 2 of the present disclosure.

### DETAILED DESCRIPTION

The cathode for the all-solid-state battery according to the present disclosure is a cathode in which a cathode mixture layer is formed on a current collector, and the cathode mixture layer includes a cathode active material, a solid electrolyte, a conductive material, and a binder, and the conductive material may include a linear-type conductive material and a point-type conductive material at a weight ratio of 4(a linear-type conductive material):1(a point-type conductive material) to 10(a linear-type conductive material):1(a point-type conductive material).

The conductive material may be added to improve the conductivity and/or mobility of lithium ions or electrons in the cathode mixture layer, and may include a mixture of linear-type conductive materials and point-type conductive materials.

The linear-type conductive material may refer to a conductive material having a fibrous structure such as a cylindrical type or a tube type and may be one or more selected from the group consisting of carbon nanotubes and carbon fibers. In a specific example, the linear-type conductive material may be one or more selected from among carbon nanotubes (CNTs), vapor grown carbon fibers (VGCFs), and carbon nanofibers (CNFs).

The point-type conductive material may refer to a conductive material having a particle shape. In a specific example, the conductive material may be one or more selected from the group consisting of Super-C65, acetylene black, Ketjen black, graphite, carbon black, tin, tin oxide and titanium oxide.

The conductive material included in the cathode mixture layer of the cathode for an all-solid-state battery according to an embodiment of the present disclosure may include a linear-type conductive material and a point-type conductive material at a weight ratio of 4:1 to 10:1, specifically 5:1 to 10:1, 5.5:1 to 10:1, 6:1 to 10:1, 6:5 to 9.5:1, 7:1 to 9.5:1, 7:1 to 9:1, 7.5:1 to 9:1 or 7.5:1 to 8.5:1. In the above range, by thickening the thickness of the electrode, it is possible to improve energy density of the all-solid-state battery while improving electron conductivity of the electrode and achieving high density of the electrode. When the weight ratio between the linear-type conductive material and the point-type conductive material among conductive materials exceeds the above range, problems such as deterioration of C-rate performance of the electrode or reduction of life characteristics may occur compared to when only the linear-type conductive material is included.

The binder may include a fibrillated binder. Specifically, the fibrillated binder may be a binder that is fibrillated into fine fibers by mechanical force including shear force. In a specific example, the binder may be one or more selected from the group consisting of polytetrafluoroethylene (PTFE), polyethylene oxide (PEO), polyacrylonitrile (PAN), polyethylene (PE), and polypropylene (PP). In an actual example, the binder may include polytetrafluoroethylene (PTFE). Meanwhile, the cathode for an all-solid-state battery according to an embodiment of the present disclosure may not solely include, as a binder, a combination consisting only of one or more binders selected from the group consisting of styrene-ethylene-butylene-styrene (SEBS), styrene-butadiene rubber (SBR), nitrile-butadiene rubber (NBR), polyvinylidene fluoride (PVDF), and poly(vinylidene fluoride-co-hexafluoropropylene) (PVDF-HFP). When only a combination consisting of one or more binders selected from the group consisting of styrene-ethylene-butylene-styrene (SEBS), styrene-butadiene rubber (SBR), nitrile-butadiene rubber (NBR), polyvinylidene fluoride (PVDF), and poly(vinylidene fluoride-co-hexafluoropropylene) (PVDF-HFP) is included as the binder, it may be impossible to form the electrode during electrode manufacture in a calendering process. However, when the cathode mixture layer is manufactured using, as a binder, a mixture of one or more fibrillated binders selected from the group consisting of polytetrafluoroethylene (PTFE), polyethylene oxide (PEO), polyacrylonitrile (PAN), polyethylene (PE), and polypropylene (PP) together with a combination of one or more binders selected from the group consisting of the above-described SEBS and the like, the electrode may be smoothly formed during the calendering process. Accordingly, the binder in the cathode mixture layer may at least include a fibrillated binder, and raw materials used for manufacturing the cathode mixture layer may at least include a fiberizable binder.

In the case where the binder in the cathode mixture layer includes a fibrillated binder, the linear-type conductive material may include carbon fiber. In this case, the carbon fiber may include vapor grown carbon fiber (VGCF), carbon nanofiber (CNF), or a mixture thereof, and specifically, may include carbon nanofiber (CNF).

In the process in which the fibrillated binder is fibrillated by a strong shear force, cohesion and fixation are generated by fine fibers to bind the cathode active material, the solid electrolyte, and the conductive material. When the linear-type conductive material has a large aspect ratio such as carbon nanotubes (CNTs), almost no defects, high hydrophobicity, and high flexibility, there is a risk of being unevenly agglomerated with each other during the fibrillation process of the binder and forming clusters. Meanwhile, compared to the CNTs, the carbon fiber may have relatively low crystallinity, so that a larger number of defects and edges may be located on its surface. In addition, the carbon fiber may have a small aspect ratio and low flexibility, as compared to the CNTs. Accordingly, when the linear-type conductive material is the carbon fiber, the fine fibers can be anchored to the surface of the carbon fiber to strongly bond between the conductive material and the binder, formation of clusters of the linear-type conductive material can be prevented, and a uniform network of the linear-type conductive material can be formed throughout the cathode mixture layer.

The aspect ratio (length/diameter ratio) of the carbon fiber may be from 5 to 50 and specifically from 10 to 50 so that clustering in a fibrillation process is prevented and the carbon fibers can be uniformly dispersed, and a conductive network by percolation can be easily formed. In this case, the diameter of the carbon fiber may be from 100 nm to 500 nm and specifically from 150 nm to 300 nm. Experimentally, the aspect ratio (diameter and length) of the carbon fiber may be calculated from a scanning electron microscope image. Specifically, after placing the carbon fiber on a substrate such that the carbon fibers do not overlap with each other, the diameter of one carbon fiber may be calculated by measuring a length in a direction crossing the longitudinal axis (a direction perpendicular to the axis) of the carbon fiber through a scanning electron microscope, the length of one carbon fiber may be calculated by measuring a distance between one end and the other end of the carbon fiber for which the diameter has been measured, and the aspect ratio of one carbon fiber may be calculated by dividing the measured length by the measured diameter. The aspect ratio of the carbon fiber may be an average value obtained by measuring the aspect ratios of at least 50 or more, specifically 100 or more, and more specifically 200 or more carbon fibers.

When the binder includes a fibrillated binder, the linear-type conductive material may include carbon fibers and the point-type conductive material may be carbon black. Carbon black can exhibit good compatibility with the fibrillated binder, particularly polytetrafluoroethylene, and has a high specific surface area and primary particles of very fine size from several to tens of nanometers. The carbon fibers have relatively large diameters and relatively small aspect ratios compared to carbon nanotubes, so that a physically sparser conductive network can be formed. Carbon black provides a large number of fine contact points (contact points providing electrical transfer paths) in the sparse conductive network by the carbon fibers, thereby significantly and uniformly improving electron conductivity of the cathode mixture layer, and even when the thickness of the cathode mixture layer increases, it can improve electron conductivity uniformly throughout the entire layer.

The carbon black may have a specific surface area of 10 to 150 m²/g, specifically 20 to 120 m²/g and a primary particle size of 5 to 100 nm, specifically 10 to 80 nm, but not limited thereto.

The carbon black may include one or more selected from the group consisting of Super-C65, acetylene black, Ketjen black, channel black, Denka black, lamp black, thermal black and furnace black, but is not limited thereto.

The solid electrolyte may be one or more selected from the group consisting of a sulfide-based solid electrolyte and an oxide-based solid electrolyte.

The sulfide-based solid electrolyte may include Li₇PS₆, Li₆PS₅Cl, Li₃PS₄, Li₁₀GeP₂S₁₂, Li_{3.25}Ge_{0.25}P_{0.75}S₄, Li₂S-P₂S₅-LiCl, Li₂S-SiS₂, LiI-Li₂S-SiS₂, LiI-Li₂S-P₂S₅. LiI-Li₂S-P₂O₅, LiI-Li₃PO₄-P₂S₅, Li₂S-P₂S₅, Li₇P₃S₁₁, LiI-Li₂S-B₂S₃, Li₃PO₄-Li₂S-Si₂S, Li₃PO₄-Li₂S-SiS₂, LiPO₄-Li₂S-SiS, Li_{9.54}Si_{1.74}P_{1.44}S_{11.7}Cl_{0.3}, Li₇P₃S₁₁, LiₐPS_{b}X_{c}, and the like, and one or more thereof may be used. In the above-described LiₐPS_{b}X_{c}, X is one or more selected from the group consisting of F, Cl, Br, and I, 5.0<a<7.0, 4.0 ≤ b≤6.0, and 0<c ≤ 2.0, and for example, Li_{5.5}PS₄.₅Cl_{1.5} or Li₆PS₅Cl_{0.5}Br_{0.5}, and the like.

The oxide-based solid electrolyte may include a perovskite type Li₃ₓLa_{2/3-x}TiO₃ (LLTO), a phosphate-based NASICON type Li₁₊ₓAlₓTi₂₋ₓ(PO₄)₃ (LATP), and a garnet type Li₇La₃Zr₂O₁₂ (LLZO), and one or more thereof may be used. In the case of Li₃ₓLa_{2/3-x}TiO₃ (LLTO), 0<x≤1/6, and in the case of Li₁₊ₓAlₓTi₂₋ₓ(PO₄)₃ (LATP), 0≤x≤1, but not limited thereto.

In the cathode for an all-solid-state battery according to an embodiment of the present disclosure, the cathode mixture layer may include a cathode active material in an amount of 75.0 wt% to 90.0 wt%, a solid electrolyte in an amount of 8.0 wt% to 24.0 wt%, a conductive material in an amount of 0.5 wt% to 3.0 wt%, and a binder in an amount of 0.3 wt% to 2.0 wt%, based on the total weight of the cathode mixture layer. In the above range, by thickening the thickness of the electrode, it is possible to improve energy density of the all-solid-state battery while improving electron conductivity of the electrode and achieving high density of the electrode.

The cathode for the all-solid-state battery according to an embodiment of the present disclosure may include a cathode current collector and a cathode mixture layer disposed on one or more surfaces of the cathode current collector.

The cathode current collector may include stainless steel, nickel, aluminum, titanium or an alloy thereof. The cathode current collector may also include carbon, nickel, titanium, or silver-treated aluminum or carbon, nickel, titanium, or silver-treated stainless steel. In addition, the cathode current collector may be a polymer substrate coated with conductive metals such as nickel, aluminum, titanium, and silver.

The cathode current collector may be in various forms such as but not limited to foils, foams, nets, porous bodies, non-woven fabrics and the like. In addition, the cathode current collector may have a thickness of from about 10 to about 50 µm, although it is not so limited.

The cathode mixture layer may include a cathode active material as an active material. The cathode active material may be a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn), and aluminum (Al).

In some embodiments, the cathode active material or lithium-nickel metal oxide may include a layered structure or crystal structure represented by Chemical Formula 1 below.

[Chemical Formula 1] LiₓNiₐM_{b}O_{2+z}

In Chemical Formula 1, 0.9≤x≤1.2, 0.6≤a≤0.99, 0.01≤b≤0.4 and -0.5≤z≤0.1. As described above, M may include Co, Mn, and/or Al.

The chemical structure represented by Chemical Formula 1 shows a bonding relationship included in the layered structure or crystal structure of the cathode active material and does not exclude other additional elements. For example, M includes Co and/or Mn, and Co and/or Mn may be provided as main active elements of the cathode active material together with Ni. Chemical Formula 1 is provided to express the bonding relationship of the main active elements and should be understood in such a way that it covers introduction and substitution of additional elements.

In an embodiment, the auxiliary elements may be added to the main active element to enhance chemical stability of the cathode active material or layered structure/crystal structure. The auxiliary elements may be incorporated together in the layered structure/crystal structure to form bonds, and this case should also be understood as included within the chemical structure range represented by Chemical Formula 1.

The auxiliary element may include one or more of, for example, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. For example, the auxiliary element may act as an auxiliary active element that contributes to capacity/output activity of a cathode active material together with Co or Mn, such as Al.

For example, the cathode active material or lithium-nickel metal oxide may include a layered structure or crystal structure represented by Chemical Formula 1-1 below.

[Chemical Formula 1-1] LiₓNiₐM1_{b1}M2_{b2}O_{2+z}

In Chemical Formula 1-1, M1 may include Co, Mn and/or Al. M2 may include the aforementioned auxiliary element. In Chemical Formula 1-1, 0.9≤x≤1.2, 0.6≤a≤0.99, 0.01≤b1+b2≤0.4, and -0.5≤z≤0.1.

The cathode active material may further include a coating element or a doping element. For example, elements substantially the same as or similar to the aforementioned auxiliary elements can be used as the coating element or the doping element. For example, one of the aforementioned elements alone or two or more thereof in combination can be used as the coating element or the doping element.

The coating element or the doping element may be present on a surface of the lithium-nickel metal oxide particle or penetrate through the surface of the lithium-nickel metal composite oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased content of nickel may be used.

Ni may be provided as a transition metal associated with the output and capacity of a lithium secondary battery. Thus, as described above, by employing a high content (high-Ni) composition in the cathode active material, it is possible to provide a high capacity cathode and a high capacity lithium secondary battery.

However, as the content of Ni increases, long-term storage stability and life cycle stability of a cathode or secondary battery may be degraded, and side reactions with an electrolyte may also increase. However, according to exemplary embodiments, by including Co, electrical conductivity can be maintained while improving life cycle stability and capacity maintenance characteristics through Mn.

The content of Ni (for example, the mole fraction of nickel in the total number of moles of nickel, cobalt and manganese) in an NCM-based lithium oxide may be greater than or equal to 0.6, greater than or equal to 0.7, or greater than or equal to 0.8. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material or a lithium iron phosphate-based (LFP) active material (e.g., LiFePO₄).

In some embodiments, the cathode active material may include an Mn-rich based active material having a chemical structure or crystal structure represented by Chemical Formula 2, for example, a Li rich layered oxide (LLO)/over lithiated oxide (OLO) based active material, and a Co-less based active material.

[Chemical Formula 2] p[Li₂MnO₃]·(1-p)[Li_{q}JO₂]

In the Chemical Formula 2, 0<p<1, 0.9≤q≤1.2 and J may include one or more elements of Mn, Ni, Co, Fe, Cr, V, Cu, Zn, Ti, Al, Mg and B.

The cathode mixture layer may optionally further include a thickener and the like, for example, carboxymethyl cellulose (CMC) as a thickener.

The thickness of the cathode mixture layer for an all-solid-state battery according to an embodiment of the present disclosure may be in a range of 60 µm to 350 µm, specifically 60 µm to 300 µm, and more particularly 60 µm to 250 µm. The thick thickness of the range can provide a high-loading electrode, thereby improving energy density for an all-solid-state battery.

In addition, in the cathode for an all-solid-state battery according to an embodiment of the present disclosure, a density of the cathode mixture layer may be 3.0 to 3.5 g/cm³, and by providing such a high-density cathode, energy density of the all-solid-state battery can be improved.

An all-solid-state battery including the cathode for an all-solid-state battery according to an embodiment of the present disclosure may be provided. Specifically, the anode used in an all-solid-state battery including the cathode for an all-solid-state battery according to the present disclosure may be any anode that can be used in an all-solid-state battery, and, for example, a known anode for an all-solid-state battery may be used.

The anode used in the all-solid-state battery according to an embodiment of the present disclosure may include an anode current collector and an anode mixture layer disposed on one or more surfaces of the anode current collector.

The anode current collector may include stainless steel, copper, nickel, titanium or an alloy thereof. The anode current collector may also include carbon-treated copper, nickel-treated copper, titanium-treated copper, silver-treated copper, carbon-treated stainless steel, nickel-treated stainless steel, titanium-treated stainless steel or silver-treated stainless steel. In addition, the anode current collector may be a polymer substrate coated with a conductive metal such as nickel, aluminum, titanium or silver.

The anode current collector may be in various forms such as but not limited to foils, foams, nets, porous bodies, non-woven fabrics and the like. In addition, the anode current collector may also have a thickness of from about 10 µm to about 50 µm.

The anode mixture layer may include an anode active material as an active material. The anode active material may include carbon-based materials such as crystalline carbon, amorphous carbon, and carbon composite, carbon fiber, lithium metal, lithium alloy, silicon (Si)-containing material, or tin (Sn)-containing material.

Examples of the crystalline carbon include graphite-based carbons such as natural graphite, artificial graphite, graphitized coke, graphitized mesocarbon microbeads (MCMB), and graphitized mesophase pitch-based carbon fibers (MPCF).

Examples of the amorphous carbon include hard carbon, soft carbon, coke, mesocarbon microbeads (MCMB), and mesophase pitch-based carbon fibers (MPCF).

The lithium metal may be pure lithium metal, lithium alloy or lithium metal having a protective layer for inhibiting dendrite growth. In an embodiment, the lithium-containing layer deposited or coated on the current collector of the anode may be used as the anode active material layer. In an embodiment, a thin film of lithium may also be used as the anode active material layer.

As the element included in the lithium alloy, aluminum, zinc, bismuth, cadmium, antimony, silicon, lead, tin, gallium or indium can be mentioned.

The silicon-containing material may provide increased capacity characteristics. The silicon-containing material may include Si, SiOₓ (0<x<2), metal-doped SiOₓ (0<x<2), silicon-carbon composites, and the like. The metal may include lithium and/or magnesium, and the metal-doped SiOₓ (0<x<2) may include metal silicates.

The anode mixture layer may optionally further include a thickener and the like, for example, carboxymethyl cellulose (CMC) as a thickener.

The all-solid-state battery may include a solid electrolyte layer interposed between the cathode and the anode. The solid electrolyte included in the solid electrolyte layer may be a sulfide-based electrolyte or an oxide-based electrolyte.

As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃LiI, Li₂S-SiS₂-P₂S₅-LiI, Li₂S-B₂S₃, Li₂S-P₂S₅-ZₘSₙ (where m and n are positive numbers and Z is Ge, Zn or Ga), Li₂S-GeS₂, Li₂S-SiS₂-Li₃PO₄, Li₂S-SiS₂-LiₚMO_{q}, (where p and q are positive numbers and M is P, Si, Ge, B, Al, Ga, or In), Li₇₋ₓPS₆₋ₓClₓ (0≤x≤2), Li₇₋ₓPS₆₋ₓBrₓ (0≤x≤2), Li₇₋ₓPS₆₋ₓIₓ (0≤x≤2), and the like. These may be used alone or in combination of two or more thereof.

As a non-limiting example, the oxide-based electrolyte may include Li₂O-B₂O₃-P₂O₅, Li₂O-SiO₂, Li₂O-B₂O₃, Li₂O-B₂O₃-ZnO, and the like. These may be used alone or in combination of two or more thereof.

According to exemplary embodiments, the all-solid-state battery may include an electrode assembly in which a cathode, an anode and a solid electrolyte layer interposed between the anode and the cathode are repeatedly disposed. In some embodiments, the electrode assembly may be of a stacking type, a z-folding type or a stack-folding type.

In the all-solid-state battery, for example, each electrode tab (a cathode tab and an anode tab) may protrude from a cathode current collector and an anode current collector, respectively, and extend to one side of a battery case. For example, the battery case may be a pouch-shaped case, a rectangular case, a cylindrical case, or a coin-shaped case.

The electrode tabs may be extended or exposed to the outside from one side of the battery case and connected with an electrode lead (a cathode lead and an anode lead). In the case where the battery case is a pouch-shaped case, the electrode tab extending to the outside from one side of the battery case may be fused with the battery case.

The method of manufacturing a cathode for an all-solid-state battery according to an embodiment of the present disclosure may include the steps of: mixing raw materials including a cathode active material, a solid electrolyte, a conductive material and a binder to provide mixed powder; kneading the mixed powder and then pulverizing the same to prepare dry cathode composition; and coating the dry cathode composition on a current collector and then rolling the same to form a cathode mixture layer, wherein the conductive material may include a linear-type conductive material and a point-type conductive material at a weight ratio of 4:1 to 10:1.

In the method for manufacturing a cathode for an all-solid-state battery according to an embodiment, a cathode active material, a solid electrolyte, a conductive material, a binder and a cathode mixture layer are substantially the same as or similar to the cathode active material, solid electrolyte, conductive material, binder, and cathode mixture layer described above in the cathode for an all-solid-state battery. Accordingly, the method for manufacturing a cathode for an all-solid-state battery may include all of the aforementioned contents in the cathode for an all-solid-state battery. However, when the cathode mixture layer includes a fibrillated binder, the binder in the raw material state is a fiberizable binder, and binders in the mixture layer may be collectively referred to as a fibrillated binder (or fiberized binders).

In an embodiment, the binder in the raw material may be a fiberizable (fibrillatable) binder. The fiberizable binder may be one or more selected from the group consisting of polytetrafluoroethylene (PTFE), polyethylene oxide (PEO), polyacrylonitrile (PAN), polyethylene (PE), and polypropylene (PP). In a substantial example, the fibrillated binder may include polytetrafluoroethylene (PTFE).

The weight average molecular weight (Mw) of the fiberizable binder may be in a range of 50,000 to 9,000,000 g/mol, specifically of 100,000 to 7,000,000 g/mol, and more specifically of 500,000 to 6,000,000 g/mol, but is not limited thereto. In this case, the weight average molecular weight (Mw) may be a value converted into polystyrene (PS) standard (PS-equivalent Mw), which is measured by gel permeation chromatography (GPC).

The fiberizable binder may be particulate. The average size (average diameter) of the fiberizable binder may be in a range of 100 to 800 µm and specifically of 200 to 800 µm so that it is easily fibrillated by shear force, strongly bonded with the cathode active material and conductive material in the dry cathode, and a uniform and strong fibrous network can be formed throughout the entire electrode. The fiberizable binder may be primary particles or secondary particles. In one example, the fiberizable binder may be an agglomerate (secondary particle) in which primary particles are aggregated. When the binder is a secondary particle, the size of the primary particle may be in a range of 50 to 400 nm and specifically of 100 to 300 nm but not limited thereto. In this case, the average size of the fiberizable binder may be a median diameter (D₅₀) based on cumulative volume, and the D₅₀ may refer to a particle diameter at which the cumulative volume corresponds to 50% in a cumulative volume particle size distribution, and may be a value measured by a laser diffraction method.

In the case where the binder is a fiberizable binder, the linear-type conductive material included in the raw materials may include carbon fibers. In addition, the point-type conductive material included in the raw materials may include carbon black.

The step of providing the mixed powder may include mixing a cathode active material, a solid electrolyte and a conductive material, adding a binder thereto, and dispersing the binder using a mixer. Herein, the mixer may be a planetary mixer, a centrifugal mixer, a planetary centrifugal mixer or the like, but is not limited thereto.

The kneading may be performed by applying shear stress or by applying heat and shear stress. The binder in the mixed powder can be fibrillated by kneading. In an embodiment, the method of manufacturing a cathode for an all-solid-state battery includes forming a cathode mixture layer in a film form or a layer using a mixture powder on which solvent is not included, by a dry process using mixed powder in a powder state without including a solvent, wherein the cathode active material, the solid electrolyte, and the conductive material may be bound to each other by fibrillating the binder.

Fibrillation of the binder refers to a process in which the binder having fine fibers that are aggregated to form bundles, is disentangled into fine fibrous forms by applying shear stress to the binder or by applying shear stress while applying heat. Accordingly, it is possible to form a fiber shape having a diameter of 100 nm or less, although the length thereof may vary. The fine fiber-shaped binder can bind cathode active material, solid electrolyte and conductive material, thereby providing a mixed powder in a paste form. In addition, the fine fiber-shaped binder can improve tensile strength of the cathode mixture layer or cathode, which makes it easy to maintain its shape and reduce the number of calendering times during subsequent rolling process.

The kneading may be performed using a device capable of providing shear stress or heat and shear stress, for example, a screw type kneader.

In the kneading process, when a screw-type kneader is used, the screw may be rotated at a speed of 10 to 50 rpm for fibrillating the binder. When the rotation speed of the screw is less than 10 rpm, the time required for fibrillation of the binder may increase excessively, and when it exceeds 50 rpm, a problem may occur in that the cathode active material is deformed due to excessive shear stress.

The kneading may be performed while applying heat of 50°C or more. When the temperature is less than 50°C, the binder may not be sufficiently fibrillated, and thus binding between cathode active materials may not occur sufficiently, so that when a dry cathode composition is prepared in film form, the resulting film may tear or have defects such as pinholes. Kneading is not limited thereto, but the upper limit of the temperature is not particularly limited as long as heat at a temperature lower than a temperature at which thermal decomposition of the binder occurs is applied. For example, heat of 200°C or less may be applied, specifically, 200°C or less, 180°C or less, 150°C or less, or 120°C or less.

The kneading may be performed for 1 to 30 minutes. If the kneading time is less than 1 minute, the fibrillation of the binder may not sufficiently occur, and thus binding between the cathode active material, the solid electrolyte, the conductive material, and the like may be insufficient, and when it exceeds 30 minutes, a rapid increase in equipment pressure due to excessive progress of fibrillation may occur.

The dry cathode composition in powder form can be obtained by pulverizing the mixed powder of paste form provided by kneading using a pulverizer. The pulverizer may be a blade mill or the like.

In the mixed powder, the cathode active material may be mixed in an amount of 75.0 to 90.0 wt%, the solid electrolyte in an amount of 8.0 to 24.0 wt%, the conductive material in an amount of 0.5 to 3.0 wt%, and the binder in an amount of 0.3 to 2.0 wt%.

The dry cathode composition may be coated on the current collector by being rolled after being sprayed in a powder form onto the current collector, or may be coated on the current collector by being stacked or laminated on the current collector after being manufactured in a film form, or may be coated on the current collector while being manufactured in a film form.

In a specific example, there are a powder coating method in which the dry cathode composition in powder form is sprayed onto the current collector and then rolled; a Maxwell method in which the dry cathode composition in powder form is manufactured into a film using a roll mill or the like, and the manufactured film is laminated onto the current collector; and a direct casting method in which the dry cathode composition is manufactured into a film on the current collector while allowing the manufactured film to be adhered to the current collector, but not limited thereto. The dry cathode composition may be coated on the current collector so that an amount of the cathode active material with respect to the area of the cathode ranges from 15 to 40 mg/cm².

The dry cathode composition may be coated on a current collector and then rolled to form the cathode mixture layer having a density of 3.0 to 3.5 g/cm³. Since the conductive material included in the cathode mixture layer includes a linear-type conductive material and a point-type conductive material at a weight ratio of 4:1 to 10:1, an electrode having a high density of 3.0 to 3.5 g/cm³ can be manufactured.

In addition, the method for manufacturing a cathode for an all-solid-state battery according to an embodiment of the present disclosure may prevent deterioration of a solid electrolyte in which chemical stability of the solid electrolyte in the cathode mixture layer is reduced due to a drying process in a wet manufacturing method, by using a dry manufacturing method.

The above description of the method for manufacturing a cathode for an all-solid-state battery may be applied to the same as described with respect to the cathode for an all-solid-state battery.

### Embodiment

### Embodiment 1

As the cathode active material, an NCM ternary-based active material was used, as the solid electrolyte, a sulfide-based solid electrolyte having an argyrodite structure was used, and as the conductive materials, CNF (diameter of 200 nm, aspect ratio of 50), and Super C₆₅ (specific surface area of about 65 m²/g, primary particle size of about 50 nm) were used, and as the binder, PTFE (Mw 5,000,000 g/mol) was used. The cathode active material, the solid electrolyte, and the conductive materials were mixed using a blade mixer, the binder was added thereto, and dispersed by using a kneader to prepare a mixed powder. Shear stress was applied to the mixed powder using a rod and a ball to fibrillate the binder so that it could be formed into dough. Herein, the cathode active material, the solid electrolyte, the conductive materials and the binder were mixed in a weight ratio of 85:13:2:1. In addition, CNFs and Super C₆₅ were mixed in a weight ratio of 4:1.

The prepared dough was pulverized into a powder form by operating the blade mill at about 10,000 rpm to thereby prepare a dry cathode composition. The dry cathode composition was manufactured in film form using rollers and the manufactured film was coated on a cathode current collector (Al foil) and then subjected to rolling under pressure of about 370 MPa. In the prepared cathode, the density of the cathode mixture layer was about 3.2 g/cm³ and the thickness of the cathode mixture layer was about 74.4 µm.

### Embodiment 2

The same as Embodiment 1 except that the CNFs and Super C₆₅ were mixed in a weight ratio of 5:1. In the prepared cathode, the density of the cathode mixture layer was about 3.2 g/cm³ and the thickness of the cathode mixture layer was about 73.9 µm.

### Embodiment 3

The same as Embodiment 1 except that the CNFs and Super C₆₅ were mixed in a weight ratio of 8:1. In the prepared cathode, the density of the cathode mixture layer was about 3.3 g/cm³ and the thickness of the cathode mixture layer was about 72.4 µm.

### Embodiment 4

The same as Embodiment 1 except that the CNFs and Super C₆₅ were mixed in a weight ratio of 10:1. In the prepared cathode, the density of the cathode mixture layer was about 3.2 g/cm³ and the thickness of the cathode mixture layer was about 73.4 µm.

### Comparative Example 1

The same as in Embodiment 1 except that the conductive material was used alone as CNFs. In the prepared cathode, the density of the cathode mixture layer was about 3.1 g/cm³ and the thickness of the cathode mixture layer was about 76.1 µm.

### Comparative Example 2

The same as Embodiment 1 except that Super C₆₅ was used alone as the conductive material. In the prepared cathode, the density of the cathode mixture layer in the prepared cathode was about 3.0 g/cm³ and the thickness of the cathode mixture layer was about 78.3 µm.

### Comparative Example 3

The same as Embodiment 1 except that the CNF and Super C₆₅ were mixed in a weight ratio of 3:1. In the prepared cathode, the density of the cathode mixture layer was about 3.1 g/cm³ and the thickness of the cathode mixture layer was about 76.1 µm.

### Experimental Example 1. Evaluation of voltage profile

An all-solid-state battery was manufactured using each of the cathodes in Embodiments 1 to 4 and Comparative Examples 1 to 3 and a Li-In anode (lithiumized indium foil) including a copper current collector, and an argyrodite-based sulfide solid electrolyte interposed between the cathode and the anode.

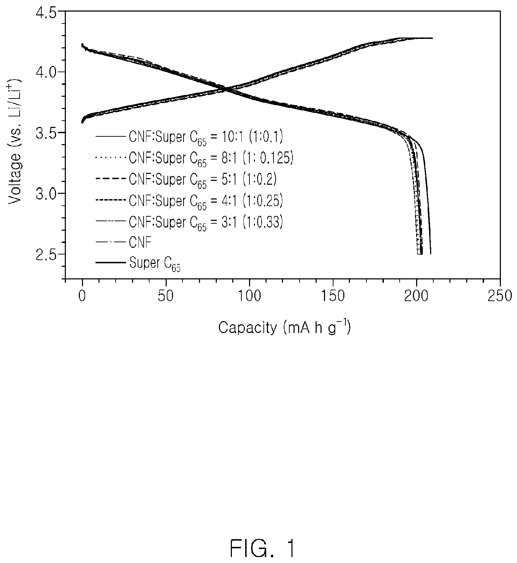

FIG. 1 shows voltage profiles of charge-discharge capacity curves obtained in the charge and discharge conditions at room temperature (25°C) and a current density of 0.1 C for each all-solid-state battery including the cathode of Embodiments 1 to 4 and Comparative Examples 1 to 3, respectively.

Referring to FIG. 1, it can be seen that each of the all-solid-state batteries including the cathodes of Embodiments 1 to 4 and Comparative Examples 1 to 3 shows a similar voltage profile at a low C-rate level of 0.1 C, indicating that charge/discharge performance is similar.

### Experimental Example 2. Evaluation of charge and discharge rate characteristics

An all-solid-state battery manufactured in the same manner as the all-solid-state battery used in Experimental Example 1 was used.

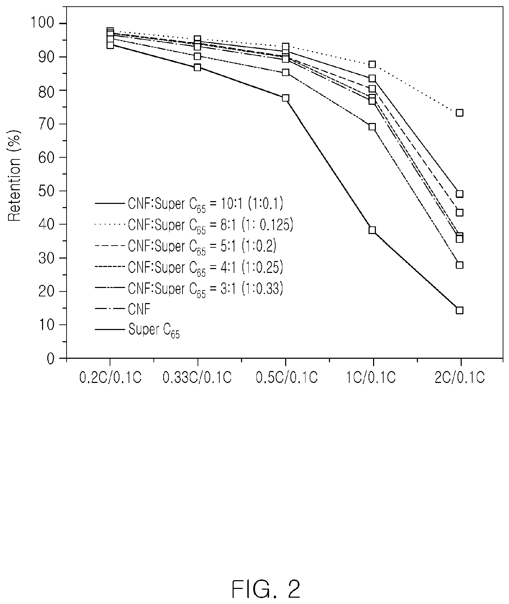

Each of the all-solid-state batteries including each of the cathodes of Embodiments 1 to 4 and Comparative Examples 1 to 4 was charged in a constant current (CC)/constant voltage (CV) mode until reaching 4.27 V at 0.1 C and then discharged in a CC mode until reaching a cut-off voltage of 2.5 V at 0.1 C at room temperature (25°C). The charge capacity and discharge capacity (the first cycle charge capacity and discharge capacity, mAh/g) were measured. In addition, for evaluating rate characteristics (0.2 C/0.1 C, 0.33 C/0.1 C, 0.5 C/0.1 C, 1.0 C/0.1 C, and 2.0 C/0.1 C), charging was performed in a CC/CV mode until reaching 4.27 V at 0.2 C, 0.33 C, 0.5 C, 1.0 C, and 2.0 C, respectively, followed by discharging in a CC mode until reaching a cut-off voltage of 2.5 V at 0.1 C. A ratio of discharge capacity to charge capacity at each C-rate was calculated as capacity retention (%) and summarized in Table 1 and shown in FIG. 2. In Table 1 and FIG. 2, X1 C/X2 C means that X1 is a charge C-rate (0.2 C, 0.33 C, 0.5 C, 1.0 C, or 2.0 C) and X2 is a discharge C-rate (0.1 C).

**(Table 1)**

| | 10:1 | 8:1 | 5:1 | 4:1 | 3:1 | CNF | Super C₆₅ |
|---|---|---|---|---|---|---|---|
| 0.2C/0.1C | 96.99 | 97.50 | 96.65 | 96.96 | 95.22 | 96.54 | 93.46 |
| 0.33C/0.1C | 94.53 | 95.39 | 93.23 | 93.92 | 90.30 | 93.08 | 86.89 |
| 0.5C/0.1C | 91.72 | 93.14 | 89.33 | 89.94 | 85.37 | 89.13 | 77.66 |
| 1C/0.1C | 83.56 | 87.62 | 80.57 | 77.72 | 69.27 | 77.00 | 38.30 |
| 2C/0.1C | 49.16 | 72.94 | 43.28 | 36.18 | 28.09 | 35.74 | 14.29 |

As shown in Table 1 and FIG. 2, as the C-rate increases, the resistance of the battery tends to increase, so that battery performance degradation may be observed. In the case of an all-solid-state battery including the cathode of Embodiments 1 to 4, it can be confirmed that high C-rate performance is superior compared to an all-solid-state battery including the cathodes of Comparative Examples 1 to 3.

The present disclosure may also relate to the following numbered aspects:
Aspects 1) A cathode for an all-solid-state battery includes a cathode mixture layer on a current collector, wherein the cathode mixture layer includes a cathode active material, a solid electrolyte, a conductive material and a binder, and the conductive material includes a linear-type conductive material and a point-type conductive material at a weight ratio of 4:1 to 10:1.
Aspect 2) In Aspect 1, The linear-type conductive material may include carbon fibers
Aspect 3), In Aspect 1 or 2, The point-type conductive material may be one or more selected from the group consisting of Super-C65, acetylene black, Ketjen black, channel black, Denka black, lamp black, thermal black and furnace black.
Aspect 4), In anyone of Aspects 1 to 3, The binder may include a fibrillated binder
Aspect 5), In anyone of Aspects 1 to 4, The binder may be one or more selected from the group consisting of polytetrafluoroethylene (PTFE), polyethylene oxide (PEO), polyacrylonitrile (PAN), polyethylene (PE), and polypropylene (PP).
Aspect 6), In anyone of Aspects 1 to 5, The solid electrolyte may be one or more selected from the group consisting of a sulfide-based solid electrolyte and an oxide-based solid electrolyte.
Aspect 7), In anyone of Aspects 1 to 6, The cathode mixture layer may include 75.0 to 90.0 wt% of the cathode active material, 8.0 to 24.0 wt% of the solid electrolyte, 0.5 to 3.0 wt% of the conductive material and 0.3 to 2.0 wt% of the binder.
Aspect 8), In anyone of Aspects 1 to 7, The density of the cathode mixture layer may be from 3.0 to 3.5 g/cm³.
Aspect 9), In anyone of Aspects 1 to 8, the thickness of the cathode mixture layer may be from 60 µm to 350 µm.
Aspect 10), A method for manufacturing a cathode for an all-solid-state battery, which includes the steps of: mixing raw materials including a cathode active material, a solid electrolyte, a conductive material and a binder to provide a mixed powder; kneading the mixed powder and then pulverizing the same to prepare a dry cathode composition; and coating the dry cathode composition on a current collector and rolling the coated composition to form a cathode mixture layer, wherein the conductive material includes a linear-type conductive material and a point-type conductive material at a weight ratio of 4:1 to 10:1.
Aspect 11), In Aspect 10, The kneading may be performed by applying shear stress or heat and shear stress.
Aspect 12), In Aspect 10 or Aspect 11, The dry cathode composition may be coated on the current collector by being rolled after being sprayed onto the current collector, or may be coated on the current collector after being manufactured in a film form, or may be coated on the current collector together while being manufactured in a film form.
Aspect 13), In anyone of Aspects 10 to 12, The raw material may include 75.0 to 90.0 wt% of the cathode active material, 8.0 to 24.0 wt% of the solid electrolyte
Aspect 14), In anyone of Aspects 10 to 13, The dry cathode composition may be coated on the current collector such that an amount of the cathode active material per area of the cathode ranges from 15 to 40 mg/cm².

## Claims

1. A cathode for an all-solid-state battery comprising a cathode mixture layer on a current collector,
wherein the cathode mixture layer comprises a cathode active material, a solid electrolyte, a conductive material and a binder, and
the conductive material comprises a linear-type conductive material and a point-type conductive material at a weight ratio of 4:1 to 10:1.

2. The cathode for an all-solid-state battery according to claim 1, wherein the linear-type conductive material comprises carbon fibers.

3. The cathode for an all-solid-state battery according to claim 1 or claim 2, wherein the point-type conductive material is one or more selected from the group consisting of Super-C65, acetylene black, Ketjen black, channel black, Denka black, lamp black, thermal black and furnace black.

4. The cathode for an all-solid-state battery according to any one of claims 1 to 3, wherein the binder comprises a fibrillated binder.

5. The cathode for an all-solid-state battery according to any one of claims 1 to 4, wherein the binder is one or more selected from the group consisting of polytetrafluoroethylene (PTFE), polyethylene oxide (PEO), polyacrylonitrile (PAN), polyethylene (PE), and polypropylene (PP).

6. The cathode for an all-solid-state battery according to any one of claims 1 to 5, wherein the solid electrolyte is one or more selected from the group consisting of a sulfide-based solid electrolyte and an oxide-based solid electrolyte.

7. The cathode for an all-solid-state battery according to any one of claims 1 to 6, wherein the cathode mixture layer comprises 75.0 wt% to 90.0 wt% of the cathode active material, 8.0 wt% to 24.0 wt% of the solid electrolyte, 0.5 wt% to 3.0 wt% of the conductive material and 0.3 wt% to 2.0 wt% of the binder.

8. The cathode for an all-solid-state battery according to any one of claims 1 to 7, wherein a density of the cathode mixture layer is from 3.0 to 3.5 g/cm³.

9. The cathode for an all-solid-state battery according to any one of claims 1 to 8, wherein a thickness of the cathode mixture layer is in a range of 60 µm to 350 µm.

10. A method for manufacturing a cathode of an all-solid-state battery comprising the steps of:
mixing raw materials comprising a cathode active material, a solid electrolyte, a conductive material and a binder to provide a mixed powder;
kneading the mixed powder and then pulverizing the same to prepare a dry cathode composition; and
coating the dry cathode composition on a current collector and rolling the coated composition to form a cathode mixture layer,
wherein the conductive material comprises a linear-type conductive material and a point-type conductive material at a weight ratio of 4:1 to 10:1.

11. The method for manufacturing a cathode of an all-solid-state battery according to claim 10, wherein the kneading is performed by applying shear stress or heat and shear stress.

12. The method for manufacturing a cathode of an all-solid-state battery according to claim 10 or claim 11, wherein the dry cathode composition is coated on the current collector by being rolled after being sprayed onto the current collector, or by being coated on the current collector in the film form, or is coated on the current collector while being manufactured in a film form.

13. The method for manufacturing a cathode of an all-solid-state battery according to any one of claims 10 to 12, wherein the raw material includes 75.0 wt% to 90.0 wt% of the cathode active material, 8.0 wt% to 24.0 wt% of the solid electrolyte, 0.5 wt% to 3.0 wt% of the conductive material and 0.3 wt% to 2.0 wt% of the binder.

14. The method for manufacturing a cathode of an all-solid-state battery according to any one of claims 10 to 13, wherein the dry cathode composition is coated on the current collector so that an amount of the cathode active material per area of the cathode ranges from 15 to 40 mg/cm².
